Europäisches Patentamt

European Patent Office

Office européen des brevets

(11) Publication number: 0 191 861
A1

# EUROPEAN PATENT APPLICATION

published in accordance with Art. 158(3) EPC

(21) Application number: 85903368.0

(22) Date of filing: 28.06.85

Data of the international application taken as a basis:

(86) International application number:
PCT/JP85/00363

(87) International publication number:
WO86/00428 (16.01.86 86/02)

(51) Int. Cl.⁴: G 05 B 19/403

(30) Priority: 30.06.84 JP 136143/84

(43) Date of publication of application:
27.08.86 Bulletin 86/35

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: KISHI, Hajimu Hino Hirayamadai Jutaku 1104
7-8, Asahigaoka 6-chome Hino-shi
Tokyo 191(JP)

(72) Inventor: TANAKA, Kunio
8-13, Tamakawa-cho 5-chome Akishima-shi
Tokyo 196(JP)

(72) Inventor: MATSUNAKA, Tohru
10-1, Asahigaoka 2-chome Hino-shi
Tokyo 191(JP)

(74) Representative: Billington, Lawrence Emlyn et al,
HASELTINE LAKE & CO Hazlitt House 28 Southampton
Buildings Chancery Lane
London WC2A 1AT(GB)

(54) METHOD OF CORRECTING SYSTEM PROGRAM.

(57) A method of correcting a system program in an automatic programming apparatus which prepares an NC program using data prepared with a predetermined language to specify a path for a tool. The system program is stored in a first external memory medium ($FD_0$) said program consists of a plurality of modules ($M_1$ - $M_2$) divided depending upon the functions and a table (BT) which stores at least the first positions of each of the modules and the data lengths. In a second external memory medium ($FD_n$) are stored a latest module ($M_4'$) and a control program (MRP) which replaces an old module ($M_4$) stored in the first external memory medium by said latest module. The contents of the second external memory medium ($FD_n$) are stored in the memory of an automatic programming apparatus, the first external memory medium ($FD_0$) is set to the automatic programming apparatus, the first position of the old module ($M_4$) is retrieved from the table (BT) being controlled by the control program (MRP) stored in the memory, and the latest module ($M_4'$) is written from said position to replace the old module with the latest module.

./...

FIG. 5

## DESCRIPTION

SYSTEM PROGRAM MODIFICATION METHOD

### Technical Field

This invention relates to a system program modification method and, more particularly, to a method of modifying a system program of an automatic programming apparatus which creates NC programs by using data created in a predetermined language for specifying a tool path.

### Background Art

An automatic programming apparatus includes a control main frame, a graphic display unit, a printer and an input/output unit such as a magnetic cassette tape or floppy disc and is very useful as it is capable of creating an NC program simply, rapidly and accurately. The main frame of the automatic programming apparatus is constituted by a computer. If software (a system program) for NC program creation is stored beforehand in an internal main memory and a group of data (a part program) specifying a tool path created in a predetermined language such as APT (automatically programmed tools) or FAPT are thereafter entered in accordance with a predetermined rule, then the apparatus will subsequently create and output, automatically, an NC program conforming to EIA or ISO codes. System programs differ depending upon the form of machining, such as turning, 2 1/2-dimensional milling, 3-dimensional milling, punching, wire-cut

-2- 0191861

electrical discharge machining and the like. A system program is created in conformance with each form of machining and is stored in an external storage medium (such as, for example, a floppy disc or magnetic cassette tape). Accordingly, when automatic programming is performed, the prescribed system program is taken from the external storage medium and stored in the main memory device of the automatic programming apparatus, after which automatic programming processing is executed.

There are cases where it is desired to modify a portion of a system program for the purpose of improving it or for some other reason. When such is the case, the conventional practice is for the maker of the apparatus to create a new system program which incorporates the modification, store the program on a floppy disc and rewrite the old system program stored on the floppy disk possessed by the user by using the new system program stored on the floppy disc of the maker. Though another method would be to prepare a number of floppy discs storing the new system program and make a disc-for-disc exchange, this approach is undesirable because of the high cost involved.

Thus, in the conventional modification method, the entirety of the old system program stored on the floppy disc in the user's possession is replaced by the new system program. Therefore, even if parameters have the same values that they did in the old system program, the user must again set these parameters for the new system program after it has been substituted for the old. The reason for this is that some data contained in the system program provided by the maker of the apparatus are given in the form of parameters so as to enable users to individually set their own values, and a system program will not operate effectively unless these parameters are set. There are a number of such parameters, examples of which are as follows:

(1) parameters specifying whether NC data are created in conformance with ISO or EIA codes;

(2) parameters specifying whether NC data are created in an incremental or absolute format;

(3) parameters specifying whether a tool path is displayed in the form of a broken line;

(4) parameters specifying minimum setting units;

(5) parameters specifying whether a decimal point is to be applied to numerical data;

and the like. For an operator to set these parameters requires a considerable amount of time.

Thus, the conventional modification method involves a troublesome operation in that the user must set parameters whenever a system program is modified.

Accordingly, an object of the present invention is to provide a system program modification method which does not require the resetting of parameters even when a system program is modified.

Another object of the present invention is to

-4-  **0191861**

provide a system program modification method in which only one module constituting a system program can be replaced by a separate new module.

Disclosure of the Invention

The present invention provides a method of modifying a system program of an automatic programming apparatus which creates NC programs by using data created in a predetermined language for specifying a tool path.

The method includes storing a system program in a first external storage medium upon being arranged in the form of plural modules classified according to function and a table storing at least a starting position of each module and length of data; storing in a second external storage medium a single up-to-date module and a control program for replacing an old module stored in the first external storage medium with the up-to-date module; storing the contents of the second external storage medium in a memory of the automatic programming apparatus; setting the first external storage medium in the automatic programming apparatus; retrieving the starting position of the old module from the table under the control of the control program stored in the memory; and successively writing in the new module from this position to replace the old module with the up-to-date module.

Brief Description of the Drawings

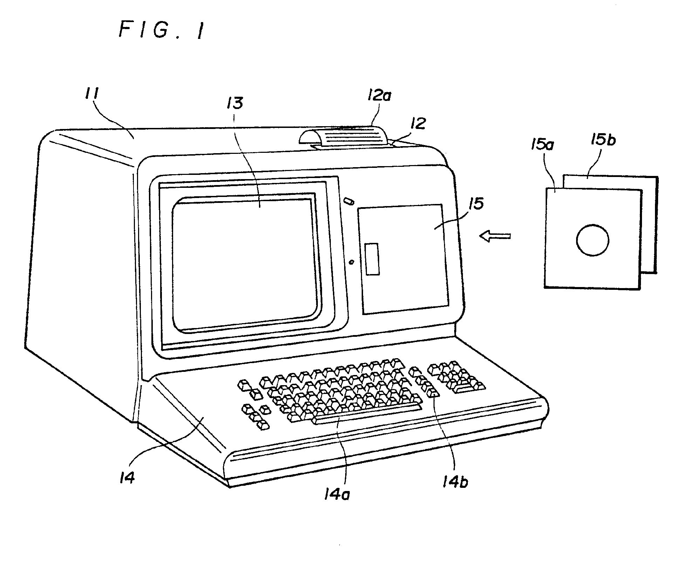

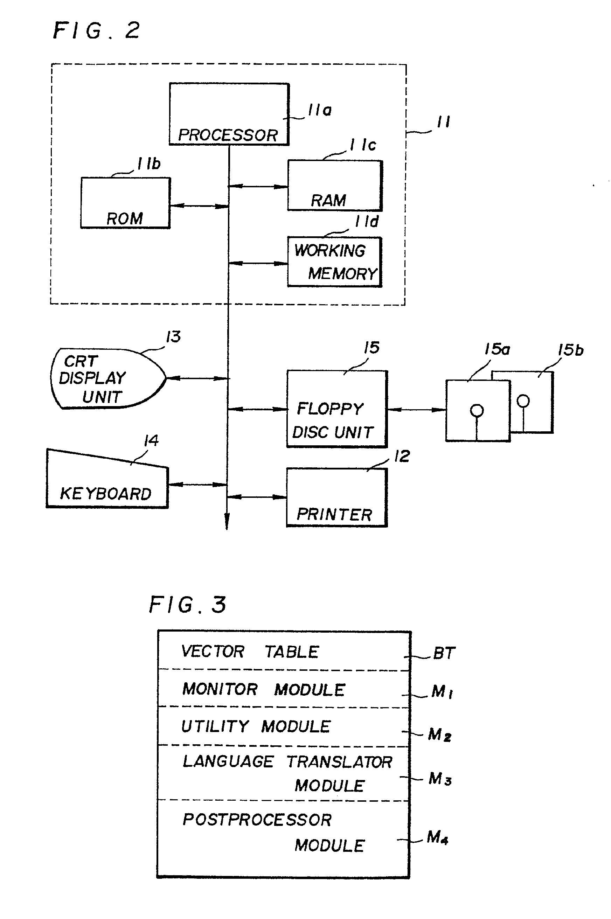

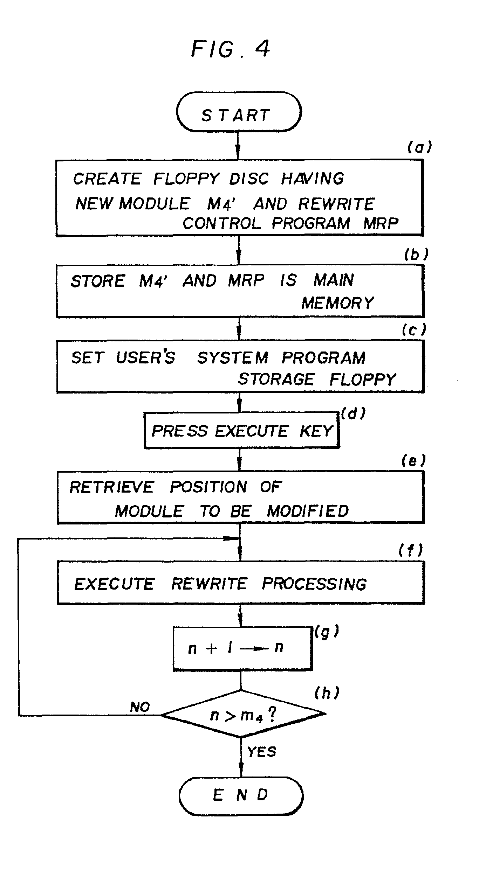

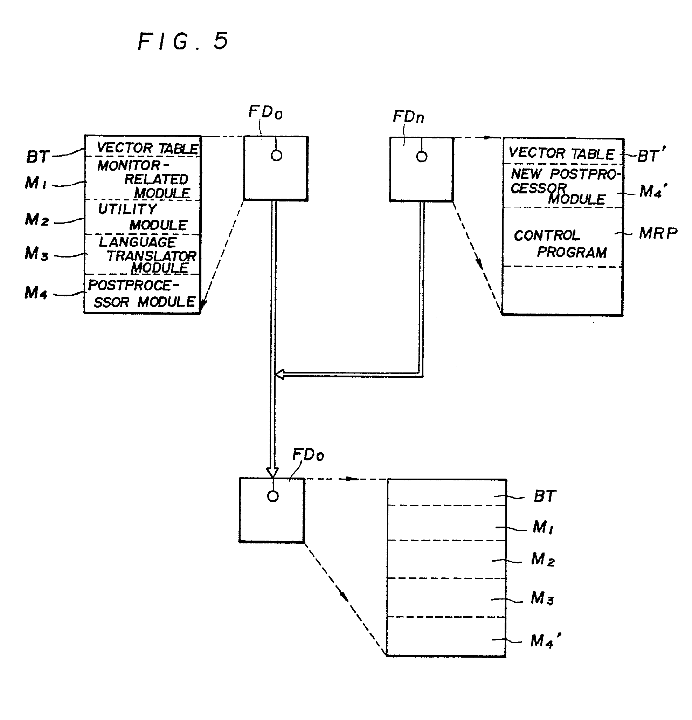

Fig. 1 is an external view of an automatic programming apparatus to which the present invention can be applied, Fig. 2 is a block diagram of the automatic programming apparatus, Fig. 3 is a view for describing the configuration of a system program, Fig. 4 is a flowchart of processing according to the present invention, and Fig. 5 is a view for describing the present invention.

Best Mode for Carrying Out the Invention

Fig. 1 is an external view of an automatic programming apparatus to which the present invention can be applied, Fig. 2 is a block diagram of the automatic programming apparatus, and Fig. 3 is a view for describing the configuration of a system program.

A main frame 11 has a top side provided with a printer 12 and a front side provided with a CRT display unit 13. Disposed in front of the CRT display unit 13 is a keyboard 14 on which there are provided an array of keys 14a such as character keys, numeric keys and function keys. Disposed at the side of the CRT display unit 13 is a floppy disc unit 15. Numeral 12a denotes a recording paper on which printing is performed by the printer 2. Numerals 15a, 15b denote floppy discs.

The main frame 11 is constituted by a microcomputer and, as shown in Fig. 2, has a processor 11a, a ROM 11b and a working memory 11d. The ROM 11b stores a loading program, under the control of which a system program is read out of a floppy disc and stored in the RAM 11c. The processor 11a executes processing

under the control of the system program, causes the CRT display unit 13 to display the results of processing and various instructions, executes prescribed processing based on data and commands inputted from the keyboard 14, creates an NC program and either prints out the program via the printer 12 or records the program on a floppy disc.

As shown in Fig. 3, the system program includes at least a plurality of modules $M_1$ - $M_4$ and a vector table BT. Module $M_1$, which is for a monitor, is a portion of the program for managing such resources as the CRT display. Utility module $M_2$ is a utility portion of the program, language translator module $M_3$ is a language program portion for language translation used when specifying a tool path, and postprocessor module $M_4$ is a program portion for creating an NC program by using entered data. The monitor module $M_1$ includes parameters set on the user side, and the postprocessor module $M_4$ has a suitable amount of blank space. The vector table BT stores storage starting positions and data lengths corresponding to the names of the modules $M_1$ - $M_4$.

Next, reference will be had to the flowchart of Fig. 4 and the explanatory view of Fig. 5 to describe processing for a case where an old postprocessor module $M_4$ stored on the floppy disc in the possession of the user is replaced by a new postprocessor module $M_4'$. Note that the characters (a) - (h) denoting the following steps are attached to the flowchart in Fig. 4.

(a)   The apparatus maker prepares a floppy disc $FD_n$ (see Fig. 5) having

(1)   a vector table BT',

(2)   the new postprocessor module $M_4'$, and

(3)   a control program MRP for replacing the old postprocessor module $M_4$ stored on a user's floppy disc $FD_o$ (see Fig. 5) with the new postprocessor module $M_4'$.

Note that the vector table BT' stores the name of the module to be modified as well as the corresponding storage starting position of this module and its data length.

(b)   Next, the floppy disc $FD_n$ is set in the floppy disc unit 15 (see Figs. 1 and 2), after which its contents (BT', $M_4'$, MRP) are read and stored in the main memory (RAM) 11c of the automatic programming apparatus main frame 11 under the control of the loading program stored in the ROM 11b.

(c)   Thereafter, the user's floppy disc $FD_o$ is set in the floppy disc unit 15.

(d)   This is followed by pressing an execute key 14b on the keyboard 14.

(e)   In response to depression of the execute key, the processor 11a is placed under the control of the control program MRP, which is for effecting module replacement, and subsequently executes module replacement processing.  Specifically, on the basis of the vector table BT' stored in RAM 11c, the processor identifies the name of the module to be modified (the postprocessor module in the present example).

Next, the processor retrieves the storage starting position of the module to be modified, namely the postprocessor module $M_4$, from the vector table BT of the floppy disc $FD_0$.

(f)  When the storage starting position has been retrieved, the new post processsor module $M_4'$ already stored in the RAM 11c is thereafter read out and successively written into the floppy disc $FD_0$ from the abovementioned starting position.

(g)  The processor counts up n by one count in accordance with

$$n + 1 \longrightarrow n$$ (where the initial value of n is 1) each time one item of data is written into the floppy disc $FD_0$.

(h)  It is then determined whether n has become equal to the data length $m_4$ of the postprocessor module $M_4'$ stored in the vector table BT'.  It should be noted that the new postprocessor module $M_4'$ is prepared in such a manner that the data length becomes $m_4$, inclusive of the blank portion.  If $n \leq m_4$ holds, the processing from step (f) onward is repeated; if $n > m_4$ holds, processing for rewriting the module is ended.

Thus, according to the present invention as described above, a system program can be modified in module units. Accordingly, by including data that have been set for parameters in a module that is not to be altered, such as the monitor module, it is possible to dispense with the need to perform the parameter setting operation whenever the system program is modified.

0191861

CLAIMS:

1. A method of modifying a system program of an automatic programming apparatus which creates an NC program by using data created in a predetermined language for specifying a tool path, characterized by:

storing a system program in a first external storage medium upon being arranged in the form of at least plural modules classified according to function and a table storing a starting position of each module and length of data;

storing in a second external storage medium a single up-to-date module and a control program for replacing an old module stored in said first external storage medium with said up-to-date module;

storing contents of said second external storage medium in a memory of the automatic programming apparatus;

setting the first external storage medium in the automatic programming apparatus;

retrieving a starting position of the old module from said table under control of the control program stored in said memory; and

successively writing in a new module from said position to replace a predetermined module of the system program with the up-to-date module.

2. A method of modifying a system program according to claim 1, characterized in that said first and second external storage media are floppy discs.

-11-    **0191861**

3.    A method of modifying a system program according to claim 1, characterized in that said system program includes a module for a monitor, a module for translating said language, and a module for creating an NC program by using data specifying a tool path created in said language.

4.    A method of modifying a system program according to claim 3, characterized in that a parameter is included in the module for the monitor.

FIG. 1

FIG. 2

FIG. 3

| | |
|---|---|
| VECTOR TABLE | BT |
| MONITOR MODULE | M₁ |
| UTILITY MODULE | M₂ |
| LANGUAGE TRANSLATOR MODULE | M₃ |
| POSTPROCESSOR MODULE | M₄ |

FIG. 4

START

(a) CREATE FLOPPY DISC HAVING NEW MODULE M4' AND REWRITE CONTROL PROGRAM MRP

(b) STORE M4' AND MRP IS MAIN MEMORY

(c) SET USER'S SYSTEM PROGRAM STORAGE FLOPPY

(d) PRESS EXECUTE KEY

(e) RETRIEVE POSITION OF MODULE TO BE MODIFIED

(f) EXECUTE REWRITE PROCESSING

(g) $n + I \rightarrow n$

(h) $n > m_4$ ?

NO

YES

END

FIG. 5

**I. CLASSIFICATION OF SUBJECT MATTER** (If several classification symbols apply, indicate all) ¹

According to International Patent Classification (IPC) or to both National Classification and IPC

Int. Cl⁴ G05B19/403

**II. FIELDS SEARCHED**

Minimum Documentation Searched ⁴

| Classification System | Classification Symbols |
|---|---|
| IPC | G05B19/18-19/42 |

Documentation Searched other than Minimum Documentation
to the Extent that such Documents are Included in the Fields Searched ⁵

| | | |
|---|---|---|
| Jitsuyo Shinan Koho | 1926 - 1985 | |
| Kokai Jitsuyo Shinan Koho | 1971 - 1985 | |

**III. DOCUMENTS CONSIDERED TO BE RELEVANT** ¹⁴

| Category* | Citation of Document, ¹⁶ with indication, where appropriate, of the relevant passages ¹⁷ | Relevant to Claim No ¹⁸ |
|---|---|---|
| Y | JP, A, 48-36581 (Fujitsu Limited), 30 May 1973 (30. 05. 73), Page 1, lower right column, lines 10 to 17 & GB, A, 1353284 & US, A, 3830576 & CA, A1, 970640 & FR, B, 2148564 & DE, B2, 239418 & DE, C3, 2239418 | 1-4 |
| Y | JP, A, 58-163007 (Fujitsu Fanuc Limited), 27 September 1983 (27. 09. 83), Page 2, upper left column, line 16 to upper right column, line 7 & EP, A2, 90525 & EP, A3, 90525 | 1-4 |

* Special categories of cited documents: ¹⁵

"A" document defining the general state of the art which is not considered to be of particular relevance

"E" earlier document but published on or after the International filing date

"L" document which may throw doubts on priority claim(s) or which is cited to establish the publication date of another citation or other special reason (as specified)

"O" document referring to an oral disclosure, use, exhibition or other means

"P" document published prior to the International filing date but later than the priority date claimed

"T" later document published after the International filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

Date of the Actual Completion of the International Search ²

September 18, 1985 (18.09.85)

Date of Mailing of this International Search Report ²

September 30, 1985 (30.09.85)

International Searching Authority ¹

Japanese Patent Office

Signature of Authorized Officer ²⁸

Form PCT.ISA/210 (second sheet) (October 1981)